Europäisches Patentamt

European Patent Office

Office européen des brevets

(19)

(11) Veröffentlichungsnummer : **0 364 913 B1**

(12) # EUROPÄISCHE PATENTSCHRIFT

(45) Veröffentlichungstag der Patentschrift :
**21.10.92 Patentblatt 92/43**

(51) Int. Cl.$^5$ : **A01D 34/67,** A01D 34/70

(21) Anmeldenummer : **89119141.3**

(22) Anmeldetag : **14.10.89**

(54) **Verfahren und Vorrichtung zum Verdichten von Gras und Laub.**

(30) Priorität : **19.10.88 DE 3835570**
**14.01.89 DE 3900969**

(43) Veröffentlichungstag der Anmeldung :
**25.04.90 Patentblatt 90/17**

(45) Bekanntmachung des Hinweises auf die
Patenterteilung :
**21.10.92 Patentblatt 92/43**

(84) Benannte Vertragsstaaten :
**AT BE DE FR GB IT NL SE**

(56) Entgegenhaltungen :
**EP-A- 0 155 437**
**DE-A- 1 582 399**

(56) Entgegenhaltungen :
**DE-A- 2 063 439**
**DE-A- 2 731 546**
**DE-A- 3 439 035**
**FR-A- 2 174 859**
**US-A- 3 641 754**

(73) Patentinhaber : **Eggenmüller, Alfred, Dr.**
**Schützenstrasse 10**
**W-7915 Elchingen 1 (DE)**

(72) Erfinder : **Eggenmüller, Alfred, Dr.**
**Schützenstrasse 10**
**W-7915 Elchingen 1 (DE)**

(74) Vertreter : **Kahler, Kurt, Dipl.-Ing.**
**Patentanwälte Kahler, Käck & Fiener**
**Maximilianstrasse 57 Postfach 12 49**
**W-8948 Mindelheim (DE)**

## Beschreibung

Die Erfindung betrifft ein Verfahren und eine Vorrichtung zum Verdichten von Gras und Laub durch Kleingeräte mit Antriebsmotor wie Rasenmäher, Vertikutier-, Saug- oder Kehrgeräten, bei welchen das gemähte oder aufgenommene Gut zunächst durch einer zerkleinerungs-vorrichtung zugeführt wird, bevor es über eine Preßeinrichtung verdichtet und in einen Bergeraum gefördert oder auf dem Boden abgelegt wird.

Ein solches Verfahren zum Verdichten von Gras und Laub ist aus der US-A-3,641,754 bekannt. Dort wird das abgemähte Gut einer nachfolgenden Zerkleinerungsvorrichtung (Shredder) zugeführt, um das gemähte Gras weiter zu zerkleinern, so daß es anschließend durch eine Preßvorrichtung wirksamer verdichtet werden kann. Durch die dem Preßvorgang vorausgehende Zerkleinerung des Grases wird das Pressen somit erleichtert, man erhält eine höhere Verdichtung. Der Shredder ist quer zur Mährichtung angeordnet, an den sich zwei Sammel-Förderschnecken und eine längs liegende Preß-Förderschnecke anschließt, die das aufgesammelte Gut in einen als Bergeraum dienenden Behälter oder in einen Beutel einpreßt.

Nachteilig bei diesem Verfahren ist der erhebliche Aufwand durch die Zerkleinerungsvorrichtung (Shredder), den Querfördermitteln und der darauffolgenden Preßeinrichtung, da hierdurch aufwendige Antriebsverzweigungen nötig sind, die einen hohen Leistungs- und Platzbedarf aufweisen. Zudem kann es zwischen den einzelnen verwinkelten Bauteilen leicht zu Verstopfungen kommen. Durch den hohen Platzbedarf und das hohe Gewicht ist diese Preßvorrichtung für Kleingeräte wie Rasenmäher somit kaum geeignet. Entsprechendes gilt für die in der DE-A-34 39 035 vorgeschlagene Preßeinrichtung für Landwirfschaftliches Erntegut zur Bildung von Großballen.

Ähnliche Nachteile gelten für einen Rasenmäher mit nachgeschalteter Ballenformvorrichtung, wie dies aus der US-A-3,242,658 bekannt ist. Hierbei wird das gemähte Gras mittels einer Zuführschnecke zu einem Preßkanal mit einem hinund hergehenden Preßkolben gefördert. Der Antriebsaufwand für die Vielzahl der einzelnen Bauteile ist hier jedoch sehr groß, so daß der Rasenmäher insgesamt relativ schwer und platzaufwendig ist. Zudem ist hier der Nachteil vorhanden, daß das gemähte Gras vor der Verdichtung nicht zusätzlich zerkleinert wird, so daß die erreichbare Verdichtung relativ gering ist. Dies gilt auch für einen Rasenmäher gemäß der US-A-3,222,853, der FR-A-2.174.859 und der FR-A-2.235.639, sowie der US-A-3,791,118, wobei jeweils eine in Fahrtrichtung des Rasenmähers liegende Förderschnecke vorgesehen ist, die das gemähte Gut in einen Behälter fördert. Hierbei ist die erreichbare Verdichtung jedoch sehr gering, da gegenüber der US-A-3,641,754 eine Zerkleinerungsvorrichtung (Shredder) vor der Preßeinrichtung fehlt. Zudem ist der Platzbedarf der Förderschnecke relativ hoch und deren Antrieb nur mittels eines aufwendigen Getriebes zu erreichen.

Demzufolge liegt der Erfindung die Aufgabe zugrunde, ein Verfahren und eine Vorrichtung zu schaffen, bei welchen unter geringem Leistungsbedarf eine hohe Verdichtung erzielt wird, sowie einen geringen Platzbedarf und eine einfache Bauweise aufweist, um in Kleingeräten wie Rasenmähern eingesetzt zu werden.

Die Aufgabe der Erfindung wird dadurch gelöst, daß das gemähte oder aufgenommene Gut zunächst durch die Preßeinrichtung zerkleinert wird, bevor es beim Weiterfördern mit derselben Preßeinrichtung in einem dieser nachfolgenden Preßkanal unter Gegendruck des sich dort befindlichen Gutes zusammengedrückt und verfilzt wird, um anschließend in den Bergeraum gedrückt oder auf den Boden abgelegt zu werden. Dabei ist es für eine optimale Füllung des Bergeraumes als auch für eine konstante Antriebsleistung des Kleingerätes vorteilhaft, den im Preßkanal durch Reibung der bereits dort verdichteten Materialschichten an den Preßkanalwänden erzeugten Gegendruck an die Füllung des Bergeraumes oder an den im Preßkanal erzeugten Widerstand bei der Förderung des Mähgutes anzupassen. Bei geringer Füllung des Bergeraumes oder des Behälters ist am Preßkanalausgang ein relativ geringer Gegendruck vorhanden, so daß durch Verengung des Preßkanals der Gegendruck erhöht werden kann, ohne den Antriebsmotor des Kleingerätes zu überlasten, während bei weitgehender Füllung des Behälters der Preßkanal erweitert wird.

Im Gegensatz zu der bekannten Lösung der US-A-3,641,754, bei der das gemähte Gras in einer jeweils gesonderten Baueinheit nachzerkleinert, quergefördert und dann verdichtet wird, werden diese Arbeitsschritte Zerkleinern und Pressen bei der vorliegenden Erfindung praktisch zeitgleich mit ein- und -derselben Vorrichtung durchgeführt, so daß sich der Bauaufwand und der Platzbedarf erheblich verringert.

Nach einem weiteren Merkmal der Erfindung wird bei einer solchen Behandlung des gemähten oder aufgenommenen Gutes das Oberflächen- und Zellwasser des Grases oder Laubes herausgedrückt und über das Pressengehäuse durch Öffnungen und Schlitze nach außen abgeleitet. Damit wird das Gewicht des verdichteten Gutes zusätzlich verringert.

Zur Durchführung der Verdichtung an einem Rasenmäher wird ein der Mäh- vorrichtung nachgeschalteter, umlaufender Zinkenrotor mit starren Zinken vorgeschlagen, die in einem Pressengehäuse umlaufen und mit gebogenen Vorderflächen in einen sich daran anschließenden Preßkanal eingreifen, so daß der Zinkenrotor zugleich als Zerkleinerungs- und Preßeinrichtung dient. Hierbei ist die Zerkleinerungs- und Preßeinrichtung in Form des Zinkenrotors bei einem Rasenmäher unter geringstmöglichem Abstand zur Umlaufbahn der Messer des Rasenmähers angeordnet, so daß sich eine kompakte Bauweise ergibt. Dabei wird das gemähte Gras durch das Zusammenwirken der gebogenen Vorderflächen der Zinken mit dem Pressengehäuse durch Zerreißen, quetschen und Zerdrücken zerkleinert und zugleich beim Weiterfördern in den sich daran anschließenden Preßkanal unter Gegendruck zusammengedrückt und verfilzt, da die gebogenen Vorderflächen der Zinken das Gras am vorher eingepreßten, bereits verdichteten Gras unter hohem Druck abstreifen, so daß sich eine besonders hohe Verdichtung ergibt. Diese wird noch zusätzlich gesteigert, wenn am Pressenmantel Längsleisten vorgesehen sind, zwischen deren Rillen die Zinken eingreifen und damit das Gras weiter zerkleinern.

Damit wird mit einfachen Mitteln eine besonders wirksame Zerkleinerungs- und Preßvorrichtung geschaffen, wobei mit nur geringem Aufwand das Oberflächen- und Zellwasser der Grashalme oder des Laubes abgeschieden werden kann. Hierzu sind im Pressengehäuse entsprechende Öffnungen und Schlitze vorgesehen.

Zur Steuerung des Preßdruckes ist der Preßkanal in seiner Weite und/oder Länge verstellbar, so daß eine Anpassung an das jeweils vorliegende Preßgut ermöglicht wird. Die Steuerung des Preßdruckes kann dabei durch das Gewicht des sich füllenden Behälters oder durch den Widerstand im Preßkanal selbst erfolgen.

Die vorgeschlagene Preßeinrichtung hat nur eine einzige rotierende Welle, nämlich den Zinkenrotor. Das Gehäuse und der Preßkanal sind dabei einfach zu gestalten, so daß insgesamt eine kompakte, leichte und einfach anzutreibende Preßeinrichtung erreicht wird. Damit sind wichtige Voraussetzungen für den Einbau in Kleingeräten wie Rasenmäher, gegeben, zumal aufgrund des geringen spezifischen Leistungsbedarfs einer solchen Preßeinrichtung nur geringfügig stärkere Motoren notwendig sind. Insbesondere bei Rasenmähern kann die zusätzliche Antriebsleistung der Preßeinrichtung durch Verringerung der Gebläsewirkung größtenteils kompensiert werden, so daß die insgesamt zur Verfügung stehende Antriebsleistung des Antriebsmotors für die Preßeinrichtung genutzt werden kann. Durch die geringen Abmessungen der Preßeinrichtung kann diese unmittelbar an die Mäh- oder Aufnahmewerkzeuge angebracht werden, so daß aufgrund der kurzen Verbindungswege zum einen die Gebläseleistung reduziert werden kann und zum anderen die Verstopfungsgefahr beträchtlich verringert wird.

Weitere vorteilhafte Ausgestaltungen der Erfindung sind Gegenstand der Unteransprüche und werden nachfolgend anhand mehrerer Ausführungsbeispiele in den Zeichnungen näher erläutert und beschrieben.

Es zeigen:

Fig. 1 einen Rasenmäher mit der erfindungsgemäßen Preßeinrichtung in Seitenansicht;

Fig. 2 eine Draufsicht gemäß Fig. 1;

Fig. 3 ein Vertikutiergerät mit der nachgeschalteten Preßeinrichtung;

Fig. 4 ein Sauggerät mit der nachgeschalteten Preßeinrichtung;

Fig. 5 eine vergrößerte Darstellung der Preßeinrichtung;

Fig. 6 einen Querschnitt durch die Preßeinrichtung längs der Linie A-A der Fig. 5;

Fig. 7 einen Querschnitt durch eine weitere Ausführungsform der Preßeinrichtung;

Fig. 8 eine Preßeinrichtung mit verstellbarer Preßkanalwand;

Fig. 9 eine Preßeinrichtung mit einer abgewandelten Ausführung gemäß Fig. 8;

Fig. 10 einen Rasenmäher mit einer bevorzugten Ausführungsform der Preßeinrichtung in Seitenansicht;

Fig. 11 eine Draufsicht gemäß Fig. 10;

Fig. 12 einen Rasenmäher in der Ausführung als Gartentraktor (sog. Aufsitzrasenmäher);

Fig. 13 eine Draufsicht gemäß Fig. 12.

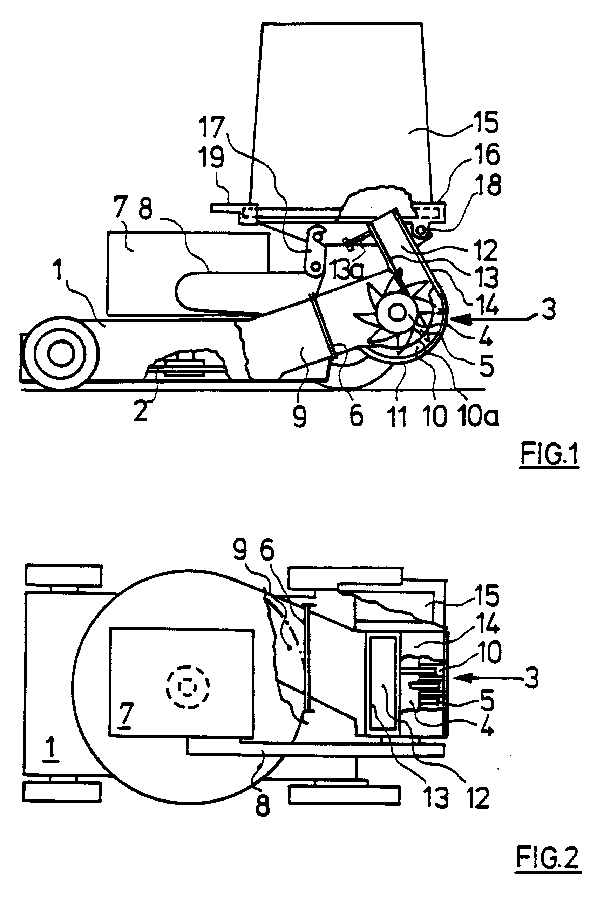

In den Figuren 1 und 2 ist ein Rasenmäher 1 mit einem umlaufenden Messer 2 dargestellt, an den sich eine Preßeinrichtung 3 mit einem Zinkenrotor 4 mit starren Zinken 5 anschließt. Die Preßeinrichtung 3 ist mit einer Trennwand 6 an den Rasenmäher 1 angekuppelt und über einen Antriebsmotor 7 mit einem Antriebsriemen 8 antreibbar.

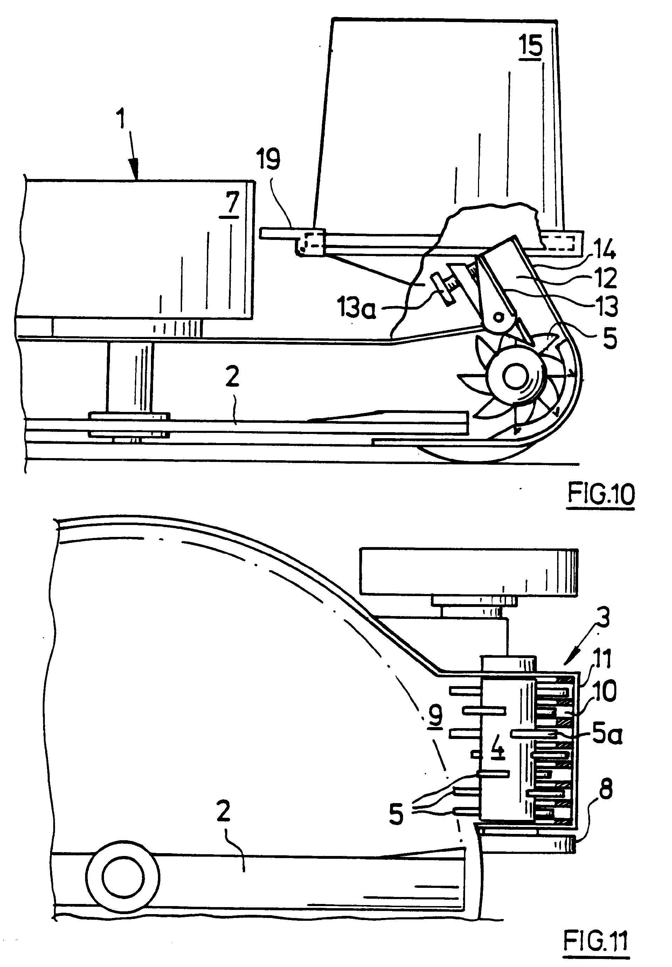

Das geschnittene Gras gelangt über den Auswurf 9 in den Bereich der Zinken 5 des Zinkenrotors 4, der das Gras durch in Fahrtrichtung orientierte Rillen 10 zwischen Leisten 10a eines Pressengehäuses 11 in einen sich daran anschließenden Preßkanal 12 fördern. Dieser wird gebildet aus einer geschlitzten Vorderwand 13, durch die sich die Zinken 5 des Zinkenrotors 4 beim Umlauf hindurchbewegen und einer Rückwand 14, die eine Fortsetzung des Pressengehäuses 11 bildet. Die Weite des Preßkanals 12 ist mittels einer Verstellvorrichtung 13a verstellbar (vgl. auch Fig. 10).

Der Preßkanal 12 mündet in einen Behälter 15, der an einem Klapprahmen 16 befestigt ist. Nach Lösen einer Klammer 17 kann der Behälter 15 um die Achse 18 geklappt werden und nach Lösen einer Klemmvorrichtung 19 abgenommen werden.

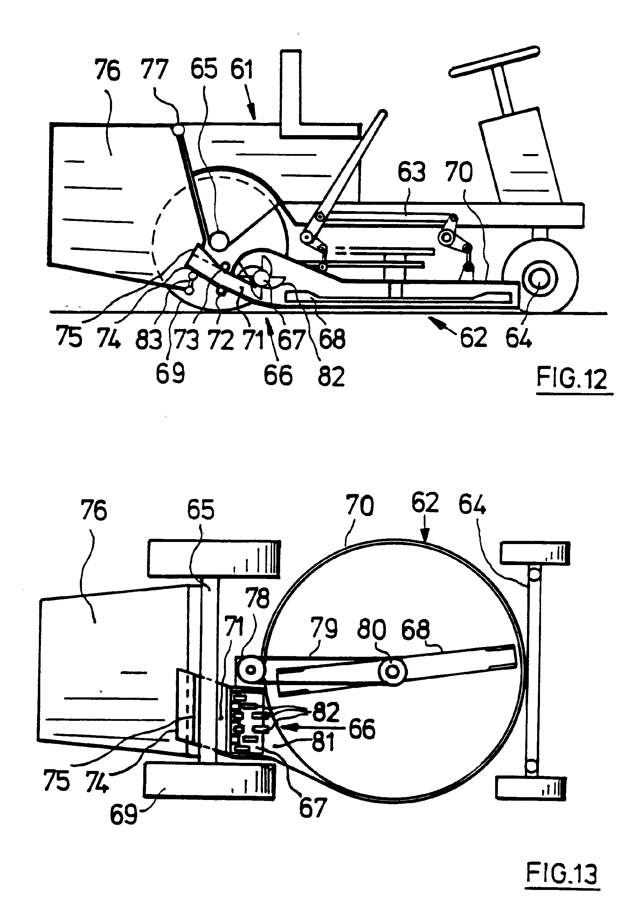

Wie aus Fig. 2 ersichtlich, greifen die Zinken 5 in Rillen 10 des Pressengehäuses 11 ein, die zwischen Leisten 10a gebildet sind, so daß das durch den Rasenmäher abgemähte Gras an der gebogenen Vorderfläche 5a (vgl. Fig. 11) der Zinken 5 im Zusammenwirken mit den Rillen 10 durch Zerreißen, Schneiden, Quetschen und Zerdrücken weiter zerkleinert wird und anschließend in den nachfolgenden Preßkanal 12 gepreßt wird. Durch diesen speziell ausgebildeten Zinkenrotor 4 werden somit zwei Arbeitsschritte, nämlich das Zerkleinern und das Weiterfördern unter hohem Preßdruck mit einer einzigen Förderbewegung und einer einzigen Preßvorrichtung praktisch zeitgleich erreicht.

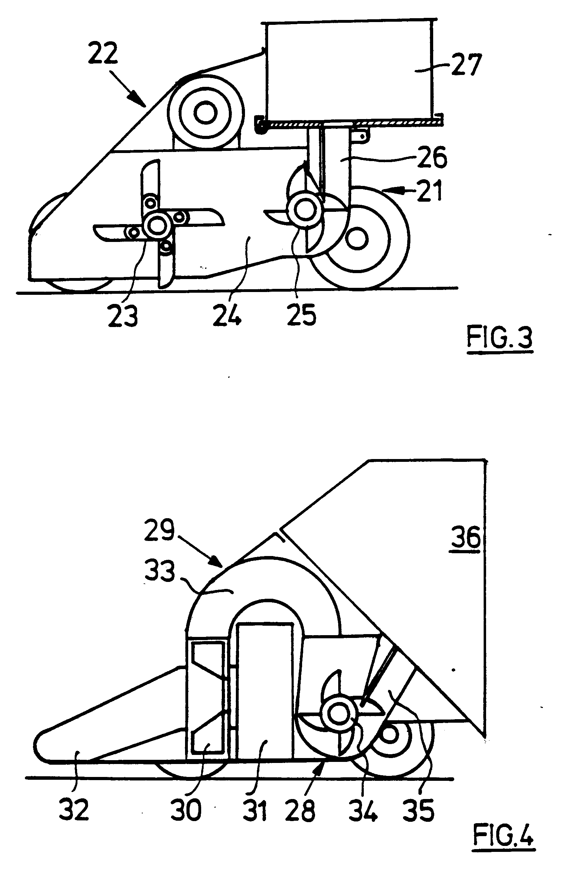

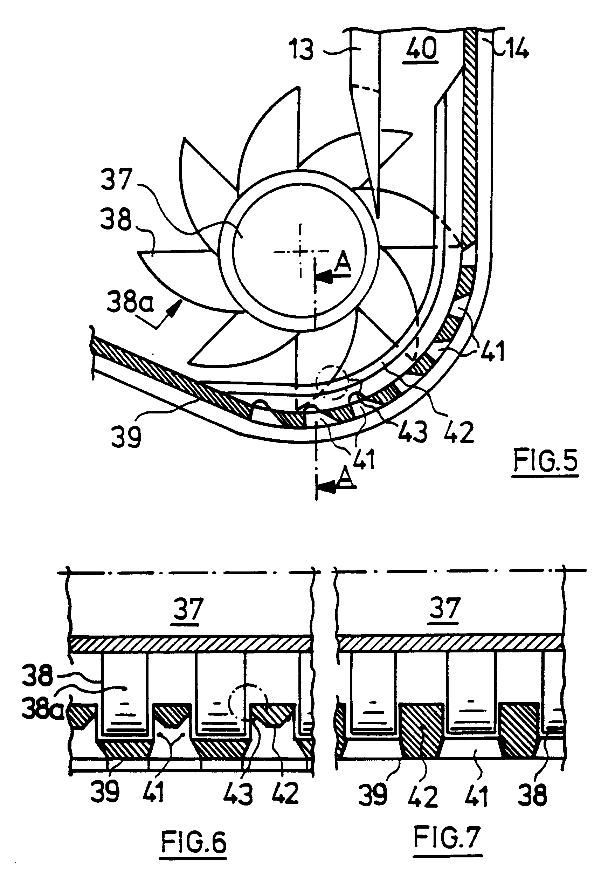

In Fig. 3 ist ein Vertikutiergerät 22 dargestellt, dem eine Preßeinrichtung 21 nachgeschaltet ist. Eine Messerwelle 23 des Vertikutiergerätes 22 fördert über einen Auswurfschacht 24 direkt in einen Zinkenrotor 25, der das Gut über einen Preßkanal 26 in einen aufgesetzten Behälter 27 drückt. Auch hier wird durch den Zinkenrotor 25 zugleich eine Zerkleinerung und eine hohe Verdichtung erreicht, wie dies im Zusammenhang mit Fig. 5 erläutert wird.

In Fig. 4 ist ein Sauggerät 29 dargestellt, das insbesondere zum Aufsaugen von Laub dient und über einen Antriebsmotor 31 angetrieben ist. Hierbei saugt ein Gebläse 30 über eine Saugdüse 32 Laub oder Gras an und bläst es über einen Auswurf 33 zu einem Zinkenrotor 34 einer nachgeschalteten Preßeinrichtung 28. Der Zinkenrotor 34 zerkleinert und verdichtet das angesaugte Laub, um es anschließend über einen Preßkanal 35 in einen Behälter 36 zu pressen. Hierbei tauchen die Zinken des Zinkenrotors 34 nicht in Längsrillen 10 (vgl. Fig. 2) ein, da bei Laub und trockenem Gras bereits die Quetschwirkung zwischen den gebogenen Vorderflächen 38a (vgl. Fig. 5) und der Innenseite des Pressenmantels 39 ausreicht, um vor dem Einpressen in den Preßkanal eine effektive Zerkleinerung zu erreichen.

In Fig. 5 ist der in den vorhergehenden Figuren beschriebene Zinkenrotor 4, 25, 34 vergrößert dargestellt und mit dem Bezugszeichen 37 gekennzeichnet. Zinken 38 des Zinkenrotors 37 führen das Gras oder das Laub entlang einem Pressengehäuse 39 einem Preßkanal 40 zu. Der Preßkanal 40 entspricht dabei dem aus den vorhergehenden Figuren bekannten Preßkanal 12, 26 und 35 weitgehend, während die Zinken 38 den Zinken 5 in Fig. 1 und 2 entsprechen. Durch das sich im Betrieb des Zinkenrotors 37 im Preßkanal 40 sammelnde Gras oder Laub wird auf das neu hinzukommende Preßgut starker Gegendruck ausgeübt, so daß das Oberflächen- und Zellwasser der Grashalme oder Laubblätter aus diesen herausgedrückt wird. Zusätzliche Flüssigkeit tritt durch den Schneid- und Quetschvorgang zwischen der Vorderfläche 38a der Zinken 38 und der Oberseite von Längsrillen 42 aus, wie dies mit einem Kreis 43 angedeutet ist. Die beim Schneiden und Quetschen entstehende Flüssigkeit wird über Öffnungen 41 im Pressengehäuse 39 nach außen abgeleitet, wobei die Öffnungen 41 entweder in den Seitenwänden der Leisten 42 und/oder im Pressengehäuse 39 angeordnet sein können, wie dies in den nachfolgenden Figuren 6 und 7 dargestellt ist. Hierbei ist auch das Eingreifen der Zinken 38 in die Längsrillen zwischen den Leisten 42 deutlich gezeigt.

In Fig. 6 ist ein Querschnitt durch den Pressengehäuse 39 dargestellt, wie dies in Fig. 5 mit der Schnittlinie A-A angedeutet ist. Die Zinken 38 sind dabei nicht geschnitten, um deren gewölbte Vorderfläche 38a darzustellen. Dabei erstrecken sich die Öffnungen 41 durch den Pressengehäuse 39 und durch die Seitenwände der Leisten 42. Wie ersichtlich greifen die Zinken 38 des Zinkenrotors 37 beträchtlich in die Längsrillen zwischen den Leisten 42 ein, so daß sich an dem mit dem Kreis 43 bezeichneten Bereich eine scherenartige Schneidwirkung zwischen den Kanten der Zinken 38 und Leisten 42 ergibt. Wie ersichtlich, sind die Zinken 38 relativ eng in die Längsrillen eingepaßt, so daß neben der Schneid- oder Zerreißwirkung im Bereich des Bezugszeichens 43 das Gras oder Laub an den Seitenflächen und der Umfangsfläche des Pressengehäuses 39 zusätzlich zerdrückt oder zerquetscht wird, bevor es unter Gegendruck in den Preßkanal 40 (bzw. 12, 26, 35) gefördert und gepreßt wird.

In Fig. 7 ist ein ähnlicher Querschnitt gemäß der Fig. 6 dargestellt, wobei jedoch die Öffnungen 41 lediglich im Pressengehäuse 39 angeordnet sind. Auch hier ist der Verlauf der Öffnungen 41 so gewählt, daß sich der Querschnitt nach außen hin vergrößert, um Verstopfungen zu vermeiden.

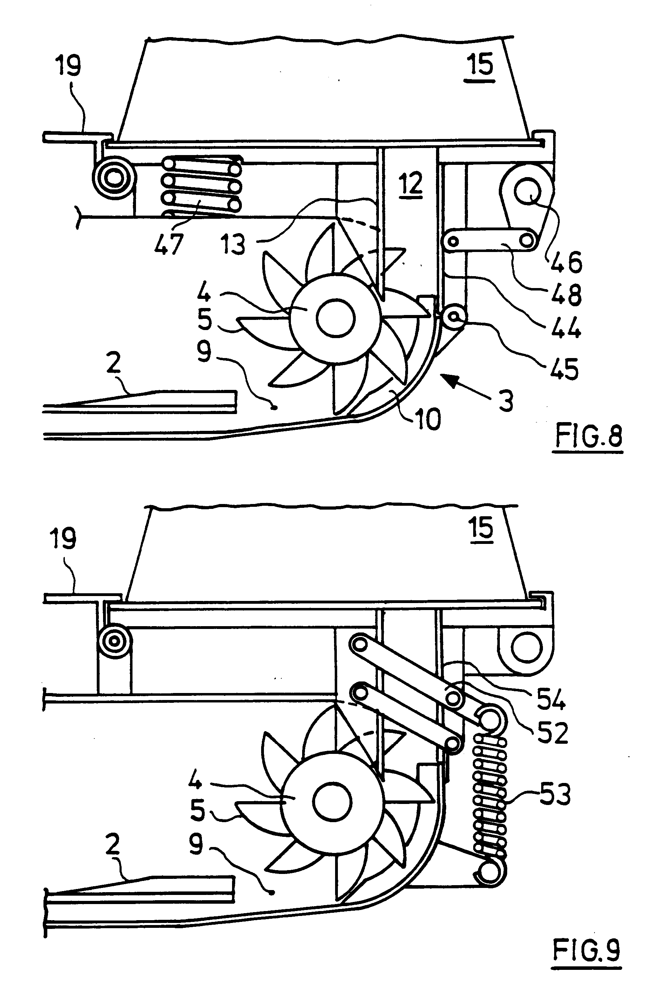

Fig. 8 zeigt in Weitergestaltung der Fig. 1 eine Preßeinrichtung 3, die über einen Preßkanal 12 in einen Behälter 15 verdichtet. Der Behälter 15 ist um eine Achse 46 drehbar gelagert und durch eine Feder 47 gehalten. Ein Gestänge 48 ist dabei mit einer Rückwand 44 des Preßkanals 12 verbunden, so daß diese verstellt werden kann. Mit zunehmendem Gewicht des Mähgutes im Behälter 15 wird die Feder 47 heruntergedrückt, so daß sich das Gestänge 48 durch Verschwenken um die Achse 46 hier nach rechts bewegt und damit die Kanalwand 44 geringfügig öffnet. Dadurch wird der Gegendruck reduziert, so daß die Antriebsleistung der Preßeinrichtung 3 im wesentlichen konstant bleibt. Ebenso könnte das Gestänge 48 auch mit der Vorderwand 13 verbunden werden, um gegen Ende des Einpreßvorgangs den Preßkanal 12 aufzuweiten. Entsprechend wird zu Beginn des Beladevorganges des noch leeren Behälters 15 der Preßkanal 12 eingeengt und damit ein hoher Gegendruck erzeugt.

In Fig. 9 ist ein Zinkenrotor 5 im Anschluß an die umlaufenden Messer 2 eines Rasenmähers 1 (vgl. Fig. 1) angeordnet und wirkt mit Längsrillen 10 zusammen, wobei das von den Messern 2 geförderte Gras zusätzlich zerkleinert und in den sich daran anschließenden Preßkanal 12 mit einer verstellbaren hinteren Kanalwand 54 gefördert wird. Die Kanalwand 54 ist dabei an Hebeln 52 gelagert und über eine Feder 53 abgestützt. Mit zunehmendem Preßdruck im Preßkanal 12 und damit erhöhtem Reibungswiderstand an der Kanalwand 54 öffnet sich der Preßkanal 12 entgegen der Vorspannkraft der Feder 55.

In Fig. 10 ist im Prinzip eine ähnliche Vorrichtung wie Fig. 1 dargestellt, wobei jedoch die Preßvorrichtung 3 so nahe wie möglich an die Umlaufbahn der Messer 2 herangerückt ist. Der Zinkenrotor 4 kann sich dabei über die gesamte Breite des Rasenmähers 1 erstrecken oder auch nur einen Teilbereich dieser Breite einnehmen, wie dies in Fig. 11 in Draufsicht dargestellt ist. Wie ersichtlich, wird das von den Messern 2 abgemähte Gut über den Auswurf 9 unmittelbar in den Bereich des Zinkenrotors 4 geschleudert, um dann von diesem im Zusammenwirken mit den Längsrillen 10 am Pressengehause 11 zusätzlich zerkleinert zu werden und in dem sich daran anschließenden Preßkanal 12 und dem Behälter 15 verdichtet zu werden.

Fig. 12 zeigt einen Gartentraktor 61 mit einem Mähwerk 62 (sog. Aufsitzrasenmäher) und Fig. 13 den Gartentraktor 61 nach Fig. 12 in Draufsicht.

Am Gartentraktor 61 ist das Mähwerk 62 mittels eines Aushubgestänges 63 zwischen der Vorderachse 64 und der Hinterachse 65 des Gartentraktors 61 angeordnet und bei Nichtbetrieb anhebbar. Eine Preßeinrichtung 66 mit einem Zinkenrotor 67 entspricht weitgehend der weiter oben beschriebenen Preßvorrichtung 3 und ist unmittelbar und mit geringem Abstand von einem Mähmesser 68, neben einem Hinterrad 69, vor der Hinterachse 65 und einem Mähgehäuse 70 des Mähwerks 62 angeordnet. Im Anschluß an einen schräg nach oben gerichteten Preßkanal 71 sind um Gelenke 72 und 73 beweglich angelenkte Förderkanalhälften 74 und 75 angebracht, die unter der Hinterachse 65 die Verbindung mit einem am hinteren Ende angeordneten Behälter 76 herstellen. Der Behälter 76 kann zum Entleeren um eine Achse 77 geschwenkt werden. Die Preßeinrichtung 68 wird über ein Schneckengetriebe 78 und einen Riementrieb 79 über eine Welle 80 des Mähwerkes 62 angetrieben.

Wie in Fig. 13 dargestellt, sind die beiden Förderkanalhälften 74 und 75 in der Draufsicht schräg nach hinten und nach innen gerichtet, um den Behälter 76 gleichmäßig zu füllen. Das abgemähte Gut gelangt von dem Mähmesser 68 über einen Einlaufbereich 81 der Preßeinrichtung 66 in einen Bereich schraublinienförmig angeordneter Zinken 82 des Zinkenrotors 67 und wird durch diese in dem hier relativ kurzen Preßkanal 71 stark verdichtet. Im weiteren Verlauf wird das verdichtete Gut dann über die beweglich angelenkten Förderkanalhälften 74 und 75 in den Behälter 76 gefördert. Obwohl hier keine Leisten 10a bzw. 42 dargestellt sind (vgl. Fig. 1 ,2 ,5 ,6 ,7), können zur Erhöhung der Verdichtung auch bei dieser Ausführung derartige Leisten 10a, 42 eingebaut oder in die Preßeinrichtung 66 eingeschwenkt werden, in die dann die umlaufenden Zinken 82 eingreifen. Auch hier kann mit zunehmendem Gewicht des Behälters 76 der Preßkanal 71 durch ein damit verbundenes Gestänge 83 aufgeweitet werden, während bei leerem Behälter 76 der Preßkanal 71 relativ eng eingestellt ist. Durch diese Anordnung der Preßvorrichtung 66 ergibt sich ein besonders kompakter Gartentraktor mit einfachem Aufbau.

## Patentansprüche

1. Verfahren zum Verdichten von Gras und Laub durch Kleingeräte mit Antriebsmotor wie Rasenmäher, Vertikutier-, Saug- oder Kehrgeräte, bei welchen das gemähte oder aufgenommene Gut zunächst einer Zerkleinerungseinrichtung zugeführt wird, bevor es über eine Preßeinrichtung verdichtet und in einen Bergeraum gefördert oder auf den Boden abgelegt wird, dadurch gekennzeichnet, daß das Gut durch die Preßeinrichtung zunächst zerkleinert wird, bevor es beim Weiterfördern mit derselben Preßeinrichtung in einem dieser nachfolgenden Preßkanal unter Gegendruck zusammengedrückt und verfilzt wird, wobei der Gegendruck im Preßkanal entsprechend der Gewichtsänderung des Bergeraumes und-/oder der Widerstandsänderung im Preßkanal veränderbar ist.

2. Verfahren nach Anspruch 1, dadurch gekennzeichnet, daß das bei der Verdichtung herausgepreßte Oberflächen- und Zellwasser im Bereich des Pressengehäuses abgeführt wird.

3. Vorrichtung zum Verdichten von Gras und Laub durch Kleingeräte mit Antriebsmotor wie Rasenmäher, mit einer Mähvorrichtung (2,62,68), einer Zerkleinerungs- und einer Preßvorrichtung, dadurch gekennzeichnet, daß der Mähvorrichtung (2,62,68) ein Zinkenrotor (4,37,67) mit starren Zinken (5,38,82) nachgeordnet ist, die in einem Pressengehäuse (11,39) umlaufen und mit gebogenen Vorderflächen (5a,38a) periodisch in einen sich daran anschließenden Preßkanal (12,40,71) eingreifen, und der Zinkenrotor (4) sowohl als Zerkleinerungs- als auch als Preßeinrichtung (3,66) ausgebildet ist und unter geringstmöglichem Abstand zur Umlaufbahn der Messer (2,68) der Mähvorrichtung (2,62,68) angeordnet ist.

4. Vorrichtung nach Anspruch 3, dadurch gekennzeichnet, daß im Pressengehäuse (11,39) Öffnungen (41) in Form von Löchern oder Schlitzen vorgesehen sind.

5. Vorrichtung nach Anspruch 4, dadurch gekennzeichnet, daß sich Öffnungen (41) in ihrem Öffnungsquerschnitt nach außen hin erweitern.

6. Vorrichtung nach Anspruch 3, dadurch gekennzeichnet, daß der Preßkanal (12,40,71) eine verstellbare Weite und/oder Länge aufweist und wenigstens eine Wand (13,14) über eine Verstelleinrichtung (13a) verstellbar ist.

7. Vorrichtung nach Anspruch 6, dadurch gekennzeichnet, daß der Behälter (15) um eine Achse (46) schwenkbar gelagert ist und auf eine Feder (47) abgestützt ist, sowie über ein Gestänge (48) mit einer verstellbaren Wand (44) des Preßkanals (12) verbunden ist.

8. Vorrichtung nach Anspruch 6, dadurch gekennzeichnet, daß verstellbare Wand (54) des Preßkanals (12) über Hebel (52) an einer Feder (53) gestützt ist.

9. Vorrichtung wenigstens nach Anspruch 7, dadurch gekennzeichnet, daß im Pressengehäuse (11,39) in Umlaufrichtung des Zinkenrotors (4,37,67) ausgerichtete Leisten (10a,42) angeordnet sind, und zwischen sich Längsrillen (10) bilden, in die die Spitzen der Zinken (5,38,82) eintauchen.

10. Vorrichtung nach Anspruch 3, dadurch gekennzeichnet, daß die Preßeinrichtung (66) bei einem Gartentraktor (61) mit zwischen Vorderachse (64) und Hinterachse (65) angeordnetem Mähwerk (62) unmittelbar vor der Hinterachse (65) zu einem Hinterrad (69) seitlich versetzt ist und der Preßkanal (71) der Preßeinrichtung (66) unter der Hinterachse (65) zu einem heckseitig angeschlossenen Behälter (76) geführt ist.

11. Vorrichtung nach Anspruch 3 oder 10, dadurch gekennzeichnet, daß die Preßeinrichtung (3,66) mit der Mähvorrichtung (2,62) fest verbunden ist und von dieser über einen Antriebsriemen (8,79) antreibbar ist.

## Claims

1. Method for compacting of grass and leafage by small equipment with a driving motor like lawn mowers, cutting,- sucking- or sweeping apparatuses in which the mowed or picked-up material is first fed to a comminuting device before it is compacted by a compacting device and fed to a container or laid on the ground, characterized in that the material is first comminuted by the compacting device before it is compressed and felted during further feeding through a press channel following the compacting device by said same compacting device, wherein the counter pressure in the press channel is variable corresponding to the change of weight of the container and/or the change of resistance in the press channel.

2. Method according to claim 1, characterized in that the surface- and cell water pressed out during the compacting is delivered in the area of the press housing.

3. Apparatus for compacting of grass and leafage by small equipment with a driving motor like lawn mowers comprising a mowing device (2, 62, 68), a comminuting- and a compacting device, characterized in that the mowing device (2, 62, 68) is followed by a tine rotor (4, 37, 67) with rigid tines (5, 38, 82) which rotate in a press housing (11, 39) and engage with arc-shaped front ends (5a, 38a) periodically in a following press channel (12, 40, 71), and the tine rotor (4) being formed both as comminuting- and as compacting device (3, 66) and being arranged with minimal distance to the rotation path of the knifes (2, 68) of the mowing device (2, 62, 68).

4. Apparatus according to claim 3, characterized in that the press housing (11, 39) is provided with openings (41) in the form of holes or slits.

5. Apparatus according to claim 4, characterized in that the openings (41) expand in their opening section in outward direction.

6. Apparatus according to claim 3, characterized in that the press channel (12, 40, 71) is provided with a variable width and/or length and at least one wall (13, 14) being adjustable by an adjusting device (13a).

7. Apparatus according to claim 6, characterized in that the container (15) is pivotably supported at an axle (46) and supported on a spring (47) and further being connected with an adjustable wall (44) of the press channel (12) by a linkage (48).

8. Apparatus according to claim 6, characterized in that an adjustable wall (54) of the press channel (12) is supported on a spring (53) by levers (52).

9. Apparatus at least according to claim 3, characterized in that there are arranged ribs (10a, 42) in the press housing (11, 39) in the rotating direction of the tine rotor (4, 37, 67), forming longitudinal grooves (10) which are engaged by the tips of the tines (5, 38, 82).

10. Apparatus according to claim 3, characterized in that the compacting device (66) is directly arranged in front of a rear axle (65) and laterally offset as regards a rear wheel (69) of a garden tractor (61) having a mowing device (62) arranged between a front axle (64) and a rear axle (65) and the press channel (71) of the compacting device (66) being directed below the rear axle (65) to a container (76) connected to the rear side.

11. Apparatus according to claim 3 or 10, characterized in that the compacting device (3, 66) is fixedly connected to the mowing device (2, 62) and rotatable from the latter via a driving belt (8, 79).

**Revendications**

1. Procédé de compactage d'herbe et de feuillage au moyen d'appareils électroménagers équipés d'un moteur d'entraînement, tels que tondeuse à gazon, broyeur vertical, appareil d'aspiration ou de balayage, dans lequel le produit tondu ou capté est d'abord amené à un dispositif de réduction en menus morceaux, avant d'être comprimé par un dispositif de pressage et transporté dans une enceinte d'abri ou déposé au sol, caractérisé en ce que le produit est d'abord réduit en menus morceaux par l'intermédiaire du dispositif de pressage, avant d'être comprimé lors de la suite du transport, à l'aide du même dispositif de pressage, dans un canal de pressage situé en aval de ce dernier et sous une contrepression, puis réduit en feutre, la contrepression régnant dans le canal de pressage étant modifiable en fonction de la fluctuation du poids de l'enceinte d'abri et/ou de la variation de la résistance dans le canal de pressage.

2. Procédé selon la revendication 1, caractérisé en ce que l'eau provenant de la surface et des cellules, qui a été exprimée lors de la compression, est évacuée dans la zone du carter de pressage.

3. Dispositif de compactage d'herbe et de feuillage au moyen d'appareils électroménagers équipés d'un moteur d'entraînement, tels que tondeuse à gazon, avec un dispositif de tonte (2,62,68), un dispositif de déchiquetage et un dispositif de pressage, caractérisé en ce qu'en aval du dispositif de tonte (2,62,68) est disposé un rotor à dents (4,37,67), équipé de dents (5,38,82) rigides, qui tournent dans un carter de pressage (11,39) et s'engagent, par des surfaces avant (5a,38a) incurvées, périodiquement dans un canal de pressage (12,40,71) connexe, et le rotor à dents (4) étant réalisé tant comme dispositif de déchiquetage que de pressage (3,66), en étant disposé avec la plus petite distance possible par rapport à la trajectoire de rotation des lames (2,68) du dispositif de tonte (2,62,68).

4. Dispositif selon la revendication 3, caractérisé en ce que des ouvertures (41) ayant la forme de trous ou de fentes sont prévues dans le carter de pressage (11,39).

5. Dispositif selon la revendication 4, caractérisé en ce que les sections transversales d'ouverture des ouvertures (41) vont en s'agrandissant vers l'extérieur.

6. Dispositif selon la revendication 3, caractérisé en ce que le canal de pressage (12,40,71) présente une largeur et/ou longueur réglable et au moins une paroi (13,14) étant réglable par l'intermédiaire d'un dispositif de réglage (13a).

7. Dispositif selon la revendication 6, caractérisé en ce que le récipient (15) est monté à pivotement autour d'un axe (46) et prend appui sur un ressort (47), et est également relié à une paroi réglable (44) du canal de pressage (12), par l'intermédiaire d'une tringlerie (48).

8. Dispositif selon la revendication 6, caractérisé en ce qu'une paroi réglable (54) du canal de pressage (12) prend appui sur un ressort (53), par l'intermédiaire de leviers (52).

9. Dispositif selon la revendication 3, caractérisé en ce que des bandes (10a,42) orientées dans la direction périphérique du rotor à dents (4,37,67) sont disposées dans le carter de pressage (11,39) et forment entre elles des rainures longitudinales (10) dans lesquelles plongent les pointes des dents (5,38,82).

10. Dispositif selon la revendication 3, caractérisé en ce que, dans le cas d'un tracteur de jardinage (61) équipé d'une tondeuse (62) disposée entre l'essieu avant (64) et l'essieu arrière (65), le dispositif de pressage (66) est décalé directement devant l'essieu arrière (65), latéralement vers une roue arrière (69), et le canal de pressage (71) du dispositif de pressage (66) est passé sous l'essieu arrière (65) vers un récipient (76) raccordé à l'arrière de l'engin.

11. Dispositif selon la revendication 3 ou 10, caractérisé en ce que le dispositif de pressage (3,66) est relié rigidement au dispositif de tonte (2,62) et susceptible d'être entraîné par ce dernier, par l'intermédiaire d'une courroie d'entraînement (8,79).

17
19
7 8
1
15
16
18
12
13
14  3
4
5
2    9    6   11   10  10a

FIG.1

9 6
15
14
10
3
7    5
4
1
8
13 12

FIG.2

FIG.3

FIG.4

FIG.5

FIG.6

FIG.7

FIG.8

FIG.9

FIG.10

FIG.11

FIG.12

FIG.13